(19) Europäisches Patentamt

European Patent Office

Office européen des brevets

(11) **EP 1 180 521 B1**

(12) **EUROPÄISCHE PATENTSCHRIFT**

(45) Veröffentlichungstag und Bekanntmachung des Hinweises auf die Patenterteilung:
**19.07.2006 Patentblatt 2006/29**

(51) Int Cl.:
*C07F 7/12* [(2006.01)]

(21) Anmeldenummer: **00117800.3**

(22) Anmeldetag: **18.08.2000**

(54) **Verfahren zur Herstellung von Allyltrichlorsilan**

Method of producing allyltrichlorosilane

Procédé de préparation d'allyltrichlorosilane

(84) Benannte Vertragsstaaten:
**AT BE CH CY DE DK ES FI FR GB GR IE IT LI LU MC NL PT SE**

(43) Veröffentlichungstag der Anmeldung:
**20.02.2002 Patentblatt 2002/08**

(73) Patentinhaber: **Degussa AG
40474 Düsseldorf (DE)**

(72) Erfinder:
  • **Batz-Sohn, Christoph, Dr.
    63452 Hanau (DE)**
  • **Just, Eckhard
    79618 Rheinfelden (DE)**

(56) Entgegenhaltungen:
  **DE-A- 4 119 994        DE-B- 1 056 609**

  • **DATABASE WPI Section Ch, Week 197902 Derwent Publications Ltd., London, GB; Class A41, AN 1979-02879B XP002157227 & JP 53 135934 A (SHINETSU CHEM IND CO LTD), 28. November 1978 (1978-11-28)**
  • **S. MUNKELT, R. MÜLLER: "Darstellung von Alkenylchlorsilanen aus Chloralkyl-Chlorsilanen" CHEM. BER., Bd. 92, 1959, Seiten 1012-1018, XP002157226**

**Beschreibung**

Die vorliegende Erfindung betrifft ein neues Verfahren zur Herstellung von Allyltrichlorsilan.

Es ist bekannt, dass man Allyltrichlorsilan über folgende Routen herstellen kann:

Über eine Grignard-Reaktion lassen sich Allylhalogenide, bevorzugt Allylbromid, Magnesium-Metall und $SiCl_4$ in Ethern zu Allyltrichlorsilan umsetzen (J. Am. Chem. Soc. (1951), 73, Seite 2599; EP 0 879 822 A2; EP 0 798 302 A1). Diese Methode erfordert hohe Sorgfalt, insbesondere bezüglich des Einsatzes trockener Lösemittel und das Arbeiten unter Inertgasbedingungen, und ist somit nur für kleinere Laboransätze geeignet. Zudem ist das Verfahren sehr aufwendig, liefert geringe Ausbeuten und die Entsorgung dabei anfallender Nebenprodukte ist sehr teuer.

Die Umsetzung von Allylchlorid mit Hexachlordisilan zu Allyltrichlorsilan und $SiCl_4$ erfordert entweder hohe Temperaturen in der Gasphase (Zh. Obshch. Khim. (1966), 66, Seiten 1484 bis 1487) oder den Einsatz von Katalysatoren. Hierfür finden insbesondere Übergangsmetalle und Übergangsmetallsalze, aber auch Amine als Co-Katalysatoren Verwendung (J. Organomet. Chem. (1982), 225, Seiten 331 bis 341; DE-OS 2 260 282; US 4 059 607). Hexachlordisilan fällt bei der Direktsynthese von Organochlorsilanen als eines von vielen Reaktionsprodukten an und muss aufwendig und kostenintensiv isoliert werden oder ist auf klassischem Wege durch reduktive Kopplung von $SiCl_4$ mit Alkalimetallen zugänglich. Diese Tatsache und auch der recht hohe Preis für Allylchlorid machen diese Route zur Herstellung von Allyltrichlorsilan sehr teuer.

Ferner lassen sich $SiCl_4$ und Allylchlorid in Gegenwart eines speziellen NickelKatalysators, der aus Nickelocen oder Nickelchlorid und Hexamethylphosphorsäureamid (HMPA) gebildet wird, zu Allyltrichlorsilan umsetzen (Tetrahedron Letters (1980), 21, Seiten 1857 bis 1860; FR 2 458 553). Für diese Reaktion sind stöchiometrische Mengen Disilan erforderlich, welche zu den entsprechenden Chlorsilanen gespalten werden, dabei den Katalysator reduzieren und somit als Akzeptoren der beiden aus Allylchlorid und $SiCl_4$ freigesetzten Chloratome wirken. Auch dieses Verfahren ist aufwendig und wenig wirtschaftlich.

Trichlorsilan kann in Gegenwart von katalytischen Mengen von Metallsalzen, beispielsweise CuCl, und stöchiometrischen Mengen von tertiären Aminen als Hilfsbasen mit Allylchlorid zu Allyltrichlorsilan und dem jeweiligen Aminhydrochlorid umgesetzt werden (J. Organomet. Chem. (1975), 96, C1-C3; DD 289 766; JP 56 008 040). Obwohl in diesem Fall alle Edukte gut zugänglich und die erzielbaren Ausbeuten befriedigend sind, macht der unvermeidbare Nebenproduktanfall und dessen Abtrennung sowie die fast unmögliche Trennung von Nebenprodukt und Katalysator das Verfahren für eine industrielle Herstellung von Allyltrichlorsilan uninteressant.

Darüber hinaus lässt sich Allyltrichlorsilan über die so genannte Direktsynthese aus der Reaktion von Silicium mit Allylchlorid in Gegenwart von Chlorwasserstoff (HCl) bei hohen Temperaturen gewinnen (Organometallics (1993), 12, Seiten 4887 bis 4891; US 5 338 876). Als Katalysator wird Kupfer eingesetzt. Eine ähnliche Reaktion ist für die Gewinnuung der Methylchlorsilane für die Silikonherstellung bekannt und wirtschaftlich nur in einem großem Maßstab zu betreiben, da stets ein Gemisch der unterschiedlich alkylierten und chlorierten Produkte entsteht. Im Gegensatz zur Direktsynthese mit Methylchlorid ist die Reaktion mit Allylchlorid von zusätzlichen Nebenreaktionen begleitet. Bedingt durch die Tatsache, dass mehrfach allylierte Silane unerwünscht sind, ist dieses Verfahren für die Herstellung von Allyltrichlorsilan ungeeignet.

Es ist auch bekannt, Chlorpropyltrichlorsilane, einzeln oder als Isomerengemisch, in Gegenwart von Ferrosilicium oder anderen Metallpulvern, wie Eisen oder Kupfer, zu dehydrochlorieren. Die Gasphasendehydrochlorierung bei 400 bis 450 °C in Gegenwart dieser Feststoffe führt allerdings nur zu Ausbeuten von ca. 3 bis 5 % Allyltrichlorsilan (Chem. Ber. (1959), 92, Seiten 1012 bis 1018). Höhere Ausbeuten an Allyltrichlorsilan lassen sich in flüssiger Phase am Siedepunkt oder unterhalb des Siedepunkts von Chlorpropyltrichlorsilan in Gegenwart von Ferrosilicium sowie Kupferpulver erzielen. Dieses Verfahren hat allerdings den Nachteil, dass sehr lange Dieses Verfahren hat allerdings den Nachteil, dass sehr lange Reaktionszeiten (ca. 100 mmol/h) notwendig sind und außerdem das Produkt neben Allyltrichlorsilan anteilig - bis hin als Hauptmenge - das unerwünschte Isomer Propenyltrichlorsilan enthält (Chem. Ber. (1959), 92, Seiten 1012 bis 1018; DE-OS 1 056 609).

Weiterhin ist bekannt, dass Alkylgruppen durch unterschiedliche Dehydrierreaktionen in die entsprechenden Olefine überführt werden können.

Bei der Herstellung von 3-Chlorpropyltrichlorsilan, welches als Ausgangsmaterial zur Herstellung der meisten organofunktionellen Silane in großen Mengen benötigt wird, entstehen durch eine unerwünschte Nebenreaktion große Mengen an n-Propyltrichlorsilan (PTS) (vgl. u. a. EP 0 519 181 A1).

Diese Nebenreaktion verbraucht zusätzlich das heute als Rohstoff knappe Trichlorsilan.

JP 53 13 5934 A (28.11.1978) offenbart die Umsetzung eines Halogenalkylsilans und eines Azabicycloalkens in Gegenwart von Nickelchlorid durch Erhitzen, wobei ein Alkenylsilan entfällt.

Ferner geht aus DE-AS 10 56 609 hervor, dass sich durch Erhitzen von β-Chlorpropyltrichlorsilan in Gegenwart von Ferrocilicium Allyltrichlorsilan bildet.

Allyltrichlorsilan kann eine interessante Alternative zu Chlorpropyltrichlorsilan für die Herstellung einer Vielzahl funktioneller Silane sein. Durch Addition geeigneter Substrate an die terminale Doppelbindung lassen sich z. B. Aminopropyl- oder Mercaptopropyl-funktionelle Silane u. a. erzeugen. Außerdem sind Allylsilane, wie z. B. Trialkoxyallylsilan, welche über Alkoholyse aus Allyltrichlorsilan hergestellt werden können, selbst interessante funktionelle Silane, beispielsweise zur Vernetzung thermoplastischer Kunststoffe.

Allerdings existieren bisher nur aufwendige bzw. mit großen Schwierigkeiten behaftete Verfahren zur Herstellung von Allyltrichlorsilan, was dazu geführt hat, dass Allyltrichlorsilan wegen seines sehr hohen Preises nicht für die genannten Zwecke in größerem Maße eingesetzt wird.

Es bestand daher die Aufgabe, ein weiteres, möglichst wirtschaftliches Verfahren zur Herstellung von Allytrichlorsilan zu entwickeln. Ein besonderes Anliegen der vorliegenden Erfindung war es, dabei PTS als Eduktkomponente zuverwenden.

Die gestellte Aufgabe wird erfindungsgemäß entsprechend den Angaben der Patentansprüche gelöst.

Überraschenderweise wurde gefunden, dass man Allylchlorsilan in einfacher und wirtschaftlicher Weise herstellen kann, wenn man PTS in der Gasphase gleichzeitig in Gegenwart von Chlor und mindestens einem oberflächenreichen Material behandelt oder wenn man PTS zunächst in Flüssig- oder Gasphase mit Chlor umsetzt und anschließend das resultierende Produktgemisch in der Gasphase in Gegenwart von mindestens einem oberflächenreichen Material behandelt oder wenn man 3-Chlorpropyltrichlorsilan (3-CI-PTS) in der Gasphase in Gegenwart von mindestens einem oberflächenreichen Material behandelt. So erhaltenes Rohprodukt wird in der Regel destillativ aufgearbeitet. Geeigneterweise erhält man dabei Allyltrichlorsilan mit einer Reinheit von 95 bis 99,5 Gew.-%, wobei die Ausbeute, bezogen auf die Eduktkomponente, in vorteilhafter Weise, da besonders wirtschaftlich, 60 bis 80 % beträgt. Nicht umgesetzte Komponenten können wieder in den Prozess zurückgeführt werden. Dabei verwendet man insbesondere Aktivkohle, Zeolith oder Kieselsäure als oberflächenreiches Material.

Das vorliegende Verfahren hat darüber hinaus gegenüber allen anderen, oben erwähnten Methoden zur Herstellung von Allyltrichlorsilan folgende Vorteile:

Beim vorliegenden Verfahren werden keine teuren Rohstoffe, wie Allylchlorid, Trichlorsilan oder Disilane, sondern der besagte Abfallstoff PTS sowie das preiswerte Chlor eingesetzt.

Es werden außer HCI und geringen Mengen an Chlor- und Organochlorsilanen keinerlei schwierig abzutrennende oder kostenintensiv zu entsorgende Nebenprodukte gebildet.

Das vorliegende Verfahren ist technisch einfach mit Standard-Apparaten zu realisieren und erfordert bei kontinuierlichem Betrieb nur den zusätzlichen Einsatz von Heizenergie.

Die beim vorliegenden Verfahren zu verwendenden Kallysatoren, d. h. oberflächenreichen Materialien, insbesondere Aktivkohle, sind in der Regel preiswert, in großen Mengen auf dem Markt verfügbar und erfordern keine spezielle Präparation.

So lassen sich im vorliegenden Verfahren bei der bevorzugten Verwendung von hochoberflächiger Aktivkohle in vorteilhafter Weise Allyltrichlorsilan-Ausbeuten von bis zu 80 % bezüglich des umgesetzten PTS bzw. 3-CI-PTS, d. h. die jeweilige Eduktkomponente, erzielen.

Gegenstand der vorliegenden Erfindung ist daher ein Verfahren zur Herstellung von Allyltrichlorsilan durch Dehydrochlorierung eines Chlorpropyltrichlorsilans oder eines Isomerengemisches von Chlorpropyltrichlorsilanen, das dadurch gekennzeichnet ist, dass man die Chlorpropyltrichlorsilankomponente in Gegenwart mindestens eines oberflächenreichen Materials aus der Reihe Aktivkohle, Zeolith und Kieselsäure in der Gasphase behandelt

Als Chlorpropyltrichlorsilankomponente kann man 3-Chlorpropyltrichlorsilan oder 2-Chlorpropyltrichlorsilan oder ein Isomerengemisch aus 3-Chlorproppyltrichlorsilan, 2-Chlorpropyltrichlorsilan und 1-Chlorpropyltrichlorsilan oder beliebige 2-Komponentengemische der erwähnten Stoffe einsetzen.

Vorzugsweise führt man das erfindungsgemäße Verfahren zur Herstellung von Allyltrichlorsilan so aus, dass man

i) n-Propyltrichlorsilan in einem ersten Schritt mit Chlor umsetzt und das resultierende Produktgemisch in einem zweiten Schritt in Gegenwart von mindestens einem oberflächenreichen Material behandelt
oder
(ii) n-Propyltrichlorsilan gleichzeitig in Gegenwart von Chlor und mindestens einem oberflächenreichen Material in der Gasphase behandelt
oder
(iii) 3-Chlorpropyltrichlorsilan in Gegenwart von mindestens einem oberflächenreichen Material in der Gasphase behandelt.

Die Umsetzung gemäß (i) erster Schritt des erfindungsgmäßen Verfahrens führt man vorzugsweise in einem Flüssigphasenreaktor in flüssiger Phase bei einer Temperatur im Bereich von 70 bis 200 °C und einem Druck von 0,2 bis 8 bar abs., besonders bevorzugt bei einer Temperatur im Bereich von 100 bis 150°C und einem Druck von 0,7 bis 5 bar abs. und ganz besonders bevorzugt bei einer Temperatur im Bereich von 110 bis 140 °C und einem Druck von 0,9 bis 1,1 bar abs. durch.

Man kann die Umsetzung gemäß (i) erster Schritt aber auch in der Gasphase bei einer Temperatur im Bereich von 130 bis 500 °C und einem Druck von 0,5 bis 1,5 bar abs., bevorzugt bei einer Temperatur im Bereich von 200 bis 400 °C und einem Druck von 0,8 bis 1,2 bar abs., besonders bevorzugt bei einer Temperatur im Bereich von 250 bis 350 °C und einem Druck von 0,9 bis 1,1 bar abs., durchführen.

Geeigneterweise setzt man bei den Verfahrensweisen (i) sowie (ii) des erfindungsgemäßen Verfahrens n-Propyltrichlorsilan und Chlor ($Cl_2$) in einem molaren Verhältnis von 1 zu 1/2 bis 1 zu 1/6 ein, wobei ein 2- bis 6-facher, insbesondere ein 4-facher, Überschuss an PTS bevorzugt ist.

Dabei erhaltenes Umsetzungsprodukt wird vorzugsweise gemäß (i) zweitem Schritt bei einer Temperatur im Bereich von 350 bis 600 °C und einem Druck von 0,5 bis 2 bar abs., bevorzugt bei einer Temperatur im Bereich von 400 bis 500 °C und einem Druck von 0,8 bis 1,5 bar abs., besonders bevorzugt bei einer Temperatur im Bereich von 420 bis 480 °C und einem Druck von 0,9 bis 1,1 bar abs., behandelt.

Ebenso kann man erfindungsgemäß die Behandlung entsprechend der Verfahrensweise (ii) bei einer Temperatur im Bereich von 130 bis 600 °C und einem Druck von 0,5 bis 2 bar abs., bevorzugt bei einer Temperatur im Bereich von 200 bis 400 °C und einem Druck von 0,8 bis 1,5 bar abs., besonders bevorzugt bei einer Temperatur im Bereich von 250 bis 350 °C und einem Druck von 0,9 bis 1,1 bar abs., durchführen.

Weiterhin kann man erfindungsgemäß die Behandlung der Verfahrensweise (iii) wie bei Variante (i) zweiter Schritt durchführen, indem man das 3-Chlorpropyltrichlorsilan dem Reaktor zuführt und in Gegenwart eines oberflächenreichen Materials in der Gasphase, vorzugsweise bei einer Temperatur im Bereich von 130 bis 600 °C und bei einem Druck von 0,5 bis 2 bar abs., besonders bevorzugt bei einer Temperatur im Bereich von 200 bis 500 °C und einem Druck von 0,8 bis 1,5 barabs., ganz besonders bevorzugt bei einer Temperatur im Bereich von 250 bis 450 °C und einem Druck von 0,9 bis 1,1 bar abs., behandelt.

Vorzugsweise führt man das erfindungsgemäße Verfahren, insbesondere gemäß (i) zweiter Schritt oder gemäß (ii) oder gemäß (iii), in einem Rohrreaktor, Rohrbündelreaktor, Festbettreaktor, Fließbettreaktor oder Wirbelschichtreaktor durch.

Beim erfindungsgemäßen Verfahren setzt man geeigneterweise ein oberflächenreiches Material mit einer inneren Oberfläche (BET) von 500 bis 2 000 $m^2$/g, vorzugsweise 600 bis 1 600 $m^2$/g, besonders vorzugsweise 700 bis 1 400 $m^2$/g, ein. Bevorzugt verwendet man als oberflächenreiches Material Aktivkohle, Zeolithe oder Kieselsäure, ganz besonders bevorzugt Aktivkohle mit Oberflächen von $\geq$ 1 300 $m^2$/g.

Weiterhin kann man beim vorliegenden Verfahren dem gasförmigen Reaktions- oder Produktgemisch, insbesondere gemäß (i) zweiter Schritt oder gemäß (ii) oder gemäß (iii), ein Inertgas, beispielsweise $N_2$, Ar oder $H_2$, zusetzen.

Zur Durchführung des erfindungsgemäßen Verfahrens, insbesondere gemäß (i) zweiter Schritt oder gemäß (ii) oder gemäß (iii), wird der Reaktor bevorzugt mit einer Gasgeschwindigkeit von 0,1 cm/s bis 10 m/s, besonders bevorzugt von 1 cm/s bis 2 m/s, ganz besonders bevorzugt von 5 cm/s bis 1 m/s, durchströmt. Dabei beträgt die mittlere Verweilzeit des Gases im Reaktor vorzugsweise 1 Sekunde bis 20 Sekunden, besonders vorzugsweise 1 bis 5 Sekunden.

Sowohl das vorliegende Verfahren gemäß (i) als auch die Verfahrensweise gemäß (ii) bzw. (iii) betreibt man bevorzugt kontinuierlich.

Man kann sich das erfindungsgemäße Verfahren hinsichtlich der Verfahrensvarianten (i) und (ii) als eine oxidierende Dehydrierung von PTS zu Allyltrichlorsilan mit Chlor als Oxidationsmittel in Gegenwart hochoberflächiger Materialien in der Gasphase vorstellen, sodass man zwei Teilreaktionen formulieren kann:

$$\text{Chlorierung von PTS} \rightarrow \text{Chlorpropyltrichlorsilan als Isomerengemisch} + \text{HCl}$$

$$\text{Dehydrochlorierung der Chlorpropyltrichlorsilane} \rightarrow \text{Allyltrichlorsilan} + \text{HCl}$$

$$\overline{\text{PTS} + Cl_2 \rightarrow \text{Allyltrichlorsilan} + 2\,\text{HCl}}$$

Erfindungsgemäß lassen sich beide Teilreaktionen gemäß (i) getrennt hintereinander oder gemäß (ii) quasi als "Eintopfreaktion" gemeinsam in einem dafür geeigneten Reaktor durchführen.

Bei der Verfahrensweise gemäß (i) kann man nach dem ersten Teilschritt (Chlorierung) das dabei erhaltene Isomerengemisch auftrennen und die Verbindungen 1-Chlorpropylsilan, 2-Chlorpropylsilan und/oder 3-Chlorpropylsilan dem zweiten Schritt (Dehydrochlorierung) zuführen. Bei der Auftrennung können gegebenenfalls auch höhere Chlorierungsprodukte abgetrennt werden. Besonders überraschend ist jedoch, dass man beim vorliegenden Verfahren das durch Chlorierung anfallende Isomerengemisch in besonders wirtschaftlicher Weise auch direkt der Dehydrochlorierung zuführen oder das Verfahren gemäß der Verfahrensweise (ii) "als Eintopfreaktion" betreiben kann und dabei Allyltrichlorid mit unerwartet hohe Selektivitäten und guten Ausbeuten erhält.

Im Allgemeinen kann das erfindungsgemäße Verfahren wie folgt durchgeführt werden:

-    Verfahrensweise (i) erster Schritt:

Die Umsetzung von PTS mit Chlor erfolgt bevorzugt bei einer Temperatur von 100 bis 123 °C, besonders vorzugsweise beim Siedepunkt von PTS. Man kann die Umsetzung aber auch in Gegenwart von Licht, UV- sowie IR-Licht, und/oder in Gegenwart eines Chlorierungskatalysators, wie Y-Zeolithe, durchführen. Die Trichlorsilylgruppe von Organochlorsilanen ist gegenüber der Chlorierung inert, - so wird in der Regel kein $SiCl_4$ abgespalten. Die Umsetzung von PTS mit Chlor erfolgt vorzugsweise in flüssiger Phase am Siedepunkt des PTS. Geeigneterweise wird das Chlorgas vorher getrocknet und fein verteilt gasförmig durch die PTS-enthaltende Reaktionsmischung geleitet. Dabei kann das Reaktionsgemisch PTS und Lösemittel, wie Tetrachlorkohlenstoff, Hexachlorethan und andere, gegenüber Chlorierung inerte Lösemittel, enthalten. Für die Umsetzung kann man einen gängigen Chlorierungsreaktor aus Glas, Edelstahl, Emaile, etc. verwenden. Das als Nebenprodukt entstehende HCl kann beispielsweise über einen Rückflusskühler aus dem System entfernt werden. Die Chlorierung wird zweckmäßigerweise bei hohem Chlorunterschuss durchgeführt, um die Bildung von Dichloriden statistisch zu vermeiden. Chlorierungen gemäß (i) erstem Schritt können zweckmäßiger Weise so betrieben, dass ständig ein Teil der Chlorierungsmischung, die einen hohen Überschuss an PTS enthält destillativ in Edukt und Produkt aufgetrennt wird und das Edukt PTS in den Reaktionsraum zurückgeführt wird. Geeigneterweise ist somit eine kontinuierliche Fahrweise gegeben und es kann die Bildung von unerwünschten Dichlorpropyltrichlorsilanen weitestgehend unterdrückt werden. PTS, die drei möglichen Isomere 1-Chlorpropyltrichlorsilan, 2-Chlorpropyltrichlorsilan und 3-Chlorpropyltrichlorsilan, die beispielsweise in einem molaren Verhältnis 1:4:4 entstehen können, sowie die in geringem Maße gebildeten höher chlorierten Produkte lassen sich destillativ trennen.

-    Verfahrensweise (i) zweiter Schritt:

Der Dehydrochlorierungsschritt wird in der Regel an hochoberflächigen Stoffen als Katalysator durchgeführt. Die Behandlung erfolgt vorzugsweise in der Gasphase bei 350 bis 600 °C, bevorzugt bei 400 bis 500 °C, besonders bevorzugt bei 420 bis 480 °C, und einer mittleren Verweilzeiten zwischen 1 und 20 s, besonders bevorzugt 2 bis 10 s. Beispielsweise geeignet ist ein mit dem Katalysator gefüllter Rohrreaktor aus einem inerten Material, wie Metall, Glas, Keramik, d. h. Materialien, die bei rund 500 °C unter den vorherrschenden Bedingungen weitgehend beständig sind. Als Edukte für (i) zweiter Schritt können sowohl die einzelnen Isomere von Chlorpropyltrichlorsilan, wie auch Gemische daraus verwendet werden. Weiterhin kann das Edukt andere unter diesen Bedingungen inerte Stoffe, wie $SiCl_4$, enthalten. Bevorzugt sind aber keine weiteren Stoffe enthalten, um die Auftrennung des Produktgemisches zu vereinfachen. Die Edukte werden in der Regel entweder vor dem Eintritt in den Dehydrochlorierungsreaktor verdampft, oder innerhalb der ersten Zone innerhalb des Reaktors verdampft, die dafür nicht mit Katalysator gefüllt sein muss, sondern zweckmäßigerweise mit anderen Füllkörpern zur Wärmeübertragung gefüllt ist. Als Füllkörper eignen sich beispielsweise Metalleinsätze,Glaskugeln, Raschig-Ringe. Nach Austritt aus dem Reaktor wird das gasförmige Reaktionsgemisch in der Regel kondensiert und so vom gebildeten Chlorwasserstoff abgetrennt. Das flüssige Produktgemisch kann je nach Umsetzungsrate noch große Mengen nicht umgesetztes Chlorpropyltrichlorsilan enthalten, welches beispielsweise destillativ vom Produkt getrennt und geeigneterweise zur weiteren Umsetzung wieder verwendet wird.

Weitere Nebenprodukte können insbesondere $SiCl_4$, Propen, Methyltrichlorsilan und Vinyltrichlorsilan sein. Verringert man beispielsweise die Verweilzeit, geht in der Regel der Umsatz zurück. Will man den Umsatz erhöhen, kann man die Verweilzeit erhöhen, allerdings kann dabei die Ausbeute an Allyltrichlorsilan zugunsten von Zersetzungsreaktionen sinken, z. B. können Methyltrichlorsilan, Vinyltrichlorsilan usw. entstehen. Variiert man bei gegebener Verweilzeit beispielsweise die Temperatur, kann man ein anderes Phänomen beobachten: Bei geringeren Temperaturen (ca. 300 bis 350 °C) findet bevorzugt eine andere Reaktion statt: die Zersetzung von Chlorpropyltrichlorsilan zu $SiCl_4$ und Propen. Bei höheren Temperaturen (ab ca. 500 °C) können zunehmend Zersetzungsreaktionen des intermediär gebildeten Allytrichlorsilans auftreten. Ebenso kann man hinsichtlich des Isomerenverhältnises Allyl-/Propenyltrichlorsilan beobachten.

PTS    Cl₂    HCl/Abgas

SiCl₄
MTCS
VTC

Verdampfer/Reaktor

Cl-PTS    Cl-PTS

Allyl-
Trichlorsilan

**Abbildung 1:**

Abbildung 1 zeigt das Schema einer bevorzugten Ausführungform einer kontinuierlich zu betreibenden, erfindungsgemäßen Anlage gemäß Verfahrensweise (i) (getrennte Chlorierung und Dehydrochlorierung).

- Verfahrensweise (ii)

Hierbei wird PTS und Chlor in Gegenwart eines Oberflächenreichen Materials in der Gasphase behandelt bzw. umgesetzt. Dafür kann einem beheizten Reaktor zunächst PTS, flüssig oder gasförmig, zugeführt und geeigneterweise im erstem Abschnitt des Reaktionsrohres Chlor zudosiert werden. Geeigneterweise betreibt man den Reaktor mit einem Temperaturgradienten im Bereich von 150 bis 600 °C. Dabei sind im Einlassbereich bis hin zur Reaktormitte 150 bis 500 °C, insbesondere 250 bis 450 °C, und zum Reaktorauslass hin 350 bis 600 °C, insbesondere 420 bis 480 °C, bevorzugt. Die Dosierung des Chlors erfolgt zweckmäßigerweise über mehrere hintereinander angeordnete Dosierstellen, sodass stets ein Chlorunterschuss zur Vermeidung der Dichloridbildung verwendet werden kann. Im weiter Verlauf des Reaktor kann dieser mit dem oberflächenreichen Material bestückt oder ausgekleidet sein. Das den Reaktor verlassende Rohprodukt wird in der Regel destillativ aufgearbeitet, wobei das im Überschuss eingesetzte Chlor sowie nicht umgesetztes PTS als Edukte zurückgeführt werden können.

PTS    Cl₂    HCl

Nebenprodukte

PTS

Allyltrichlorsilan

**Abbildung 2:**

Abbildung 2 zeigt das Schema einer bevorzugten Ausführungform einer kontinuierlich zu betreibenden, erfindungsgemäßen Anlage gemäß Verfahrensweise (ii) ("Eintopfreaktion").

- Verfahrensweise (iii)

Im Allgemeinen wird als Edukt 3-Chlorpropyltrichlorsilan (3-CI-PTS) dem Reaktor zugeführt und hier in Gegenwart eines oberflächenreichen Materials in der Gasphase behandelt. Hierfür gilt im Grundsatz auch das bereits für die Verfahrensweisen (i) zweiter Schritt sowie (ii) Offenbarte. So liefert die erfindungsgemäße Dehydrochlorierung von 3-CI-PTS in einfacher und wirtschaftlicher Weise Allyltrichlorsilan-Ausbeuten bis zu 80 % bezüglich 3-CI-PTS. Außerdem kann in vorteilhafter Weise ein Isomerenverhältnis der Dehydrochlorierungsprodukte Allyltrichlorsilan und Propenyltrichlorsilan ($H_3C$-CH=CH-$SiCl_3$) von 35 : 1 erreicht werden, was einer Allyltrichlorsilanreinheit von $\geq$ 97 % entspricht.

**Abbildung 3:**

Abbildung 3 zeigt das Schema einer bevorzugten Ausführungsform einer kontinuierlich zu betreibenden Anlage gemäß Verfahrensweise (iii).
Die vorliegende Erfindung wird durch die nachfolgenden Beispiele näher erläutert.

**Beispiel 1**

Chlorierung von PTS

In einem 1-l-Vierhalskolben mit Gaseinleitungsrohr, Tropftrichter, Rückflusskühler, Heizpilz und Innenthermometer werden zunächst 500 g PTS vorgelegt und zum Rückfluss erhitzt. Über einen Auslass am Boden des Kolbens werden mittels einer Dosierpumpe pro Stunde ca. 400 ml Flüssigkeit entnommen und auf eine Destillationskolonne gegeben, die in der Lage ist, die chlorierten Produkte als Sumpf sauber abzutrennen. Das Kopfprodukt dieser Kolonne enthält somit fast reines PTS, welches zurück in den Reaktionskolben fließt. Nachdem sich hier ein stabiler Kreislauf gebildet hat, wird mit der Dosierung von 40 g Chlorgas pro Stunde begonnen, welches zuvor mittels Durchleiten durch konz. Schwefelsäure getrocknet wird. Gleichzeitig werden über den Tropftrichter 100g PTS pro Stunde dosiert, sodass sich insgesamt ein kontinuierlicher Betrieb ergibt. Am Boden der Kolonne werden nach Einstellung eines stationären Betriebszustands pro Stunde ca. 120 g chloriertes Produkt abgezogen. Durch diese Fahrweise ergibt sich rechnerisch bei der Chlorierung ein molarer vierfacher PTS-Überschuss, sodass die Bildung von Dichloriden zurückgedrängt wird. Das gebildete Produkt besitzt laut GC folgende Zusammensetzung (Gew.-%): 9,95% 1-Chlorpropyltrichlorsilan, 42,11 % 2-Chlorpropyltrichlorsilan, 45,48 % 3-Chlorpropyltrichlorsilan sowie zusammen 2,73 % dichlorierter Produkte (insgesamt 6 Isomere).

**Beispiele 2 bis 9**

Dehydrohalogenierung

In einem Metallrohr von 62 cm Länge und 34 mm Innendurchmesser werden auf ca. 50 cm Länge insgesamt 211 g einer hochoberflächigen Aktivkohle (Picatal D7, 4 x 8 mesh, BET-Oberfläche 1.300 m$^2$/g) gegeben. Es ergibt sich in diesem Bereich ein Leerrohrvolumen von 162 ml. Das Restvolumen des Rohrs wird mit Raschigringen aufgefüllt. Dieses Rohr wird auf 350 bis 500 °C (genauer Wert siehe Tabelle 1) mittels eines Rohrofens beheizt. Auf der Seite der Raschigringe wird nun neben einem gleichmäßigen Inertgasstrom (Stickstoff, trocken) Chlorpropyltrichlorsilan (3-Chlorpropyltrichlorsilan oder Isomerengemisch aus Beispiel 1) dosiert (Dosiermenge siehe Tabelle 1). Dieses verdampft nun in der Zone der Raschigringe, wird durch die Aktivkohlezone geleitet und reagiert dort. Am Austritt des Rohres wird das gasförmige Reaktionsgemisch mittels eines Rückflusskühlers kondensiert und gesammelt. Die Abgase (HCl, evtl. Propen) verlassen über einen Intensivkühler (-20 °C) das System. Die dort gesammelten Kondensate werden mit den anderen vereinigt und analysiert (GC).

**Tabelle 1:**

| Versuchsparameter | | | | |
|---|---|---|---|---|
| Beispiel | Cl-PTS-Menge [g/h] | N$_2$-Strom [l/h] | Verweilzeit [s] | Temperatur [°C] |
| 2 | 500 | 5 | 4,3 | 350 |
| 3 | 526 | 5 | 3,8 | 400 |
| 4 | 185 | 7,2 | 8,3 | 450 |
| 5 | 345 | 7,2 | 4,9 | 450 |
| 6 | 542 | 5 | 3,6 | 450 |
| 7 | 522 | 7,2 | 3,5 | 450 |
| 8 | 609 | 7,2 | 3,0 | 450 |
| 9 | 526 | 5 | 3,2 | 500 |
| 10* | 406* | 7 | 4,4 | 450 |
| * Isomerengemisch | | | | |

Tabelle 2:

| Beispiel | Ausbeute bzgl. umgesetzter Cl-PTS | | | | | | | ATCS/ PNTCS | Umsatz % |
|---|---|---|---|---|---|---|---|---|---|
| | TCS % | STC % | MTCS % | VTC % | ATCS % | PTS % | PNTCS % | | |
| 2 | 6,07 | 25,00 | 11,25 | 1,69 | 26,41 | 26,80 | 2,78 | 9,51 | 6,92 |
| 3 | 0,53 | 9,73 | 10,01 | 3,33 | 67,74 | 5,99 | 2,67 | 25,37 | 17,19 |
| 4 | 0,00 | 60,29 | 32,19 | 0,15 | 1,01 | 6,77 | 0,60 | 1,69 | 99,36 |
| 5 | 0,61 | 36,10 | 19,19 | 1,86 | 26,79 | 10,24 | 5,21 | 5,14 | 70,29 |
| 6 | 0,34 | 4,93 | 9,04 | 4,42 | 77,08 | 1,65 | 2,54 | 30,36 | 40,14 |
| 7 | 0,39 | 8,15 | 9,38 | 3,86 | 72,43 | 2,67 | 3,11 | 23,29 | 39,97 |
| 8 | 0,22 | 4,66 | 7,85 | 3,83 | 79,36 | 1,80 | 2,29 | 34,71 | 31,20 |
| 9 | 0,71 | 6,47 | 12,56 | 6,53 | 68,64 | 0,79 | 4,30 | 15,95 | 70,44 |
| 10 | 0,95 | 27,90 | 3,15 | 1,63 | 37,10 | 4,70 | 24,60 | 1,50 | 70,40 |
| TCS = Trichlorsilan ATCS = Allyltrichlorsilan (2-Propenyltrichlorsilan) | | | | | | | | | |

(fortgesetzt)

| |
|---|
| STC = Siliciumtetrachlorid PTS = Propyltrichlorsilan |
| MTCS = Methyltrichlorsilan PNTCS = 1-Propenyltrichlorsilan |
| VTC = Vinyltrichlorsilan |

**Patentansprüche**

1. Verfahren zur Herstellung von Allyltrichlorsilan durch Dehydrochlorierung eines Chlorpropyltrichlorsilans oder eines Isomerengemisches von Chlorpropyltrichlorsilanen,
**dadurch gekennzeichnet,**
**dass** man die Chlorpropyltrichlorsilankomponente in Gegenwart mindestens eines oberflächenreichen Materials aus der Reihe Aktivkohle, Zeolith und Kieselsäure in der Gasphase behandelt.

2. Verfahren nach Anspruch 1,
**dadurch gekennzeichnet,**
**dass** man

i) n-Propyltrichlorsilan in einem ersten Schritt mit Chlor umsetzt und das resultierende Produktgemisch in einem zweiten Schritt in Gegenwart von mindestens einem oberflächenreichen Material behandelt
oder
(ii) n-Propyltrichlorsilan gleichzeitig in Gegenwart von Chlor und mindestens einem oberflächenreichen Material in der Gasphase behandelt
oder
(iii) 3-Chlorpropyltrichlorsilan in Gegenwart eines oberflächenreichen Materials in der Gasphase behandelt.

3. Verfahren nach Anspruch 1 oder 2,
**dadurch gekennzeichnet,**
**dass** man ein oberflächenreiches Material mit einer inneren Oberfläche (BET) von 500 bis 2 000 $m^2$/g einsetzt.

4. Verfahren nach einem der Ansprüche 1 bis 3,
**dadurch gekennzeichnet,**
**dass** man die Behandlung in der Gasphase bei einer Temperatur im Bereich von 120 bis 600 °C und einem Druck im Bereich von 0,3 bis 2 bar abs. durchführt.

5. Verfahren nach einem der Ansprüche 2 bis 4,
**dadurch gekennzeichnet,**
**dass** man die Umsetzung gemäß (i) erster Schritt in einem Flüssigphasenreaktor in flüssiger Phase bei einer Temperatur im Bereich von 70 bis 200 °C und einem Druck von 0,2 bis 8 bar abs. durchführt.

6. Verfahren nach einem der Ansprüche 2 bis 4,
**dadurch gekennzeichnet,**
**dass** man die Umsetzung gemäß (i) erster Schritt in der Gasphase bei einer Temperatur im Bereich von 130 bis 500 °C und einem Druck von 0,5 bis 1,5 bar abs. durchführt.

7. Verfahren nach einem der Ansprüche 2 bis 6,
**dadurch gekennzeichnet,**
**dass** man die Behandlung gemäß (i) zweiter Schritt bei einer Temperatur im Bereich von 350 bis 600 °C und einem Druck von 0,5 bis 2 bar abs. durchführt.

8. Verfahren nach einem der Ansprüche 2 bis 4,
**dadurch gekennzeichnet,**
**dass** man die Behandlung gemäß (ii) bei einer Temperatur im Bereich von 130 bis 600 °C und einem Druck von 0,5 bis 2 bar abs. durchführt.

9. Verfahren nach einem der Ansprüche 2 bis 8,
**dadurch gekennzeichnet,**

**dass** man n-Propyltrichlorsilan und Chlor in einem molaren Verhältnis von 1 zu 1/2 bis 1 zu 1/6 einsetzt.

10. Verfahren nach einem der Ansprüche 2 bis 4,
    **dadurch gekennzeichnet,**
    **dass** man die Behandlung gemäß (iii) bei einer Temperatur im Bereich von 130 bis 600 °C und einem Druck von 0,5 bis 2 bar abs. durchführt.

11. Verfahren nach einem der Ansprüche 8 bis 10,
    **dadurch gekennzeichnet,**
    **dass** man das Verfahren gemäß (i) zweiter Schritt oder gemäß (ii) oder gemäß (iii) in einem Rohrreaktor, Rohrbündelreaktor, Festbettreaktor, Fließbettreaktor oder Wirbelschichtreaktor durchführt.

12. Verfahren nach einem der Ansprüche 1 bis 11,
    **dadurch gekennzeichnet,**
    **dass** man dem gasförmigen Reaktions- oder Produktgemisch ein Inertgas zusetzt.

13. Verfahren nach einem der Ansprüche 1 bis 12,
    **dadurch gekennzeichnet,**
    **dass** der Reaktor zur Durchführung des Verfahrens mit einer Gasgeschwindigkeit von 0,1 cm/s bis 10 m/s durchströmt wird.

14. Verfahren nach Anspruch 13,
    **dadurch gekennzeichnet,**
    **dass** man die mittlere Verweilzeit des Gases im Reaktor 1 Sekunde bis 20 Sekunden beträgt.

15. Verfahren nach einem der Ansprüche 1 bis 14,
    **dadurch gekennzeichnet,**
    **dass** man das Verfahren kontinuierlich betreibt.

**Claims**

1. A process for preparing allyltrichlorosilane by dehydrochlorinating a chloropropyltrichlorosilane or an isomer mixture of chloropropyltrichlorosilanes,
   **characterized in that**
   the chloropropyltrichlorosilane component is treated in the gas phase in the presence of at least one high-surface area material from the group of activated carbon, zeolite and silica.

2. A process according to claim 1,
   **characterized in that**

   i) n-propyltrichlorosilane is reacted with chlorine in a first step and the resulting product mixture is treated in the presence of at least one high-surface area material in a second step
   or
   (ii) n-propyltrichlorosilane is treated in the gas phase simultaneously in the presence of chlorine and at least one high-surface area material
   or
   (iii) 3-chloropropyltrichlorosilane is treated in the gas phase in the presence of a high-surface area material.

3. A process according to either of claims 1 and 2,
   **characterized in that**
   a high-surface area material with an inner surface area (BET) of 500 to 2000 $m^2$/g is used.

4. A process according to any one of claims 1 to 3,
   **characterized in that**
   the treatment in the gas phase is carried out at a temperature in the range from 120 to 600°C and a pressure in the range from 0.3 to 2 bar abs.

**5.** A process according to any one of claims 2 to 4,
**characterized in that**
the reaction according to (i) first step is carried out in a liquid phase reactor in the liquid phase at a temperature in the range from 70 to 200°C and a pressure of 0.2 to 8 bar abs.

**6.** A process according to any one of claims 2 to 4,
**characterized in that**
the reaction according to (i) first step is carried out in the gas phase at a temperature in the range from 130 to 500°C and a pressure of 0.5 to 1.5 bar abs.

**7.** A process according to any one of claims 2 to 6,
**characterized in that**
the treatment according to (i) second step is carried out at a temperature in the range from 350 to 600°C and a pressure of 0.5 to 2 bar abs.

**8.** A process according to any one of claims 2 to 4,
**characterized in that**
the treatment according to (ii) is carried out at a temperature in the range from 130 to 600°C and a pressure of 0.5 to 2 bar abs.

**9.** A process according to any one of claims 2 to 8,
**characterized in that**
n-propyltrichlorosilane and chlorine are used in a molar ratio of 1:1/2 to 1:1/6.

**10.** A process according to any one of claims 2 to 4,
**characterized in that**
the treatment according to (iii) is carried out at a temperature in the range from 130 to 600°C and a pressure of 0.5 to 2 bar abs.

**11.** A process according to any one of claims 8 to 10,
**characterized in that**
the process according to (i) second step or according to (ii) or according to (iii) is carried out in a tubular reactor, tube bundle reactor, fixed bed reactor, moving bed reactor or fluidized bed reactor.

**12.** A process according to any one of claims 1 to 11,
**characterized in that**
an inert gas is added to the gaseous reaction or product mixture.

**13.** A process according to any one of claims 1 to 12,
**characterized in that**
the reactor for performing the process is flowed through at a gas flow rate of 0.1 cm/s to 10 m/s.

**14.** A process according to Claim 13,
**characterized in that**
the mean residence time of the gas in the reactor is 1 second to 20 seconds.

**15.** A process according to any one of claims 1 to 1-4,
**characterized in that**
it is operated continuously.

**Revendications**

**1.** Procédé de préparation d'allyltrichlorosilane par déshydrochloration d'un chloropropyltrichlorosilane ou d'un mélange d'isomères de chloropropyltrichlorosilanes,
**caractérisé en ce qu'**
on traite en phase gazeuse les composants chloropropyltrichlorosilanes en présence d'au moins un matériau à haut degré de surface du genre charbon actif, zéolithe et acide silicique.

**2.** Procédé selon la revendication 1,
**caractérisé en ce que**

i) dans une première étape, on fait réagir du n-propyltrichlorosilane avec du chlore et, dans une deuxième étape, on traite le mélange de produit résultant en présence d'au moins un matériau à haut degré de surface,
ou

ii) on traite en phase gazeuse du n-propyltrichlorosilane en présence de chlore et d'au moins un matériau à haut degré de surface,
ou

iii) on traite en phase gazeuse du 3-chloropropyltrichlorosilane en présence d'un matériau à haut degré de surface.

**3.** Procédé selon la revendication 1 ou 2,
**caractérisé en ce qu'**
on emploie un matériau à haut degré de surface présentant une surface interne (BET) allant de 500 à 2 000 m$^2$/g.

**4.** Procédé selon l'une des revendications 1 à 3,
**caractérisé en ce qu'**
on conduit le traitement dans la phase gazeuse à une température dans la plage de 120 à 600 °C et sous une pression dans la plage de 0,3 à 2 bars absolu.

**5.** Procédé selon l'une des revendications 2 à 4,
**caractérisé en ce qu'**
on conduit la réaction selon i), première étape, en phase liquide dans un réacteur à phase liquide à une température dans la plage de 70 à 200 °C et sous une pression de 0,2 à 8 bars absolus.

**6.** Procédé selon l'une des revendications 2 à 4,
**caractérisé en ce qu'**
on conduit la réaction selon i), première étape, en phase gazeuse à une température dans la plage de 130 à 500 °C et sous une pression de 0,5 à 1,5 bar absolu.

**7.** Procédé selon l'une des revendications 2 à 6,
**caractérisé en ce qu'**
on conduit le traitement selon i), deuxième étape à une température dans la plage de 350 à 600 °C et sous une pression de 0,5 à 2 bars absolus.

**8.** Procédé selon l'une des revendications 2 à 4,
**caractérisé en ce qu'**
on conduit le traitement selon ii) à une température dans la plage de 130 à 600 °C et sous une pression de 0,5 à 2 bars absolus.

**9.** Procédé selon l'une des revendications 2 à 8,
**caractérisé en ce qu'**
on emploie du n-propyltrichlorosilane et du chlore dans un rapport molaire de 1 pour 1/2 à 1 pour 1/6.

**10.** Procédé selon l'une des revendications 2 à 4,
**caractérisé en ce qu'**
on conduit le traitement selon iii) à une température dans la plage de 130 à 600 °C et sous une pression de 0,5 à 2 bars absolus.

**11.** Procédé selon l'une des revendications 8 à 10,
**caractérisé en ce qu'**
on conduit le procédé selon i) deuxième étape, selon ii) ou selon iii) dans un réacteur tubulaire, un réacteur à faisceau de tubes, un réacteur à lit fixe, un réacteur à lit fluidisé ou un réacteur à lit fluidisé circulant.

**12.** Procédé selon l'une des revendications 1 à 11,
**caractérisé en ce qu'**
on ajoute un gaz inerte au mélange de produits ou au mélange réactionnel gazeux.

**13.** Procédé selon l'une des revendications 1 à 12,
**caractérisé en ce que**
le réacteur permettant de mettre en oeuvre le procédé est parcouru par un flux de gaz dont la vitesse va de 0,1 cm/s à 10 m/s.

**14.** Procédé selon la revendication 13,
**caractérisé en ce que**
le temps de séjour moyen du gaz dans le réacteur va de 1 seconde à 20 secondes.

**15.** Procédé selon l'une des revendications 1 à 14,
**caractérisé en ce qu'**
on met en oeuvre le procédé en continu.